# EUROPÄISCHE PATENTSCHRIFT

(11) **EP 1 613 526 B1**
(45) Veröffentlichungstag und Bekanntmachung des Hinweises auf die Patenterteilung: **07.05.2008**
(21) Anmeldenummer: 04724570.9
(22) Anmeldetag: 31.03.2004
(51) Int. Cl.: B62J 27/00

(54) **MOTORRAD MIT RÜCKHALTEEINRICHTUNG**
MOTORCYCLE COMPRISING A RESTRAINING DEVICE
MOTOCYCLE POURVU D'UN DISPOSITIF DE RETENUE

(30) Priorität: 16.04.2003 DE 10317439
(43) Veröffentlichungstag der Anmeldung: 11.01.2006
(73) Patentinhaber: Bayerische Motoren Werke Aktiengesellschaft, 80809 München (DE)
(72) Erfinder: PFEIFER, Reiner, 81371 München (DE)
(86) Internationale Anmeldenummer: PCT/EP2004/003379
(87) Internationale Veröffentlichungsnummer: WO 2004/092000

(56) Entgegenhaltungen:
- EP-A- 1 348 616
- DE-A- 2 531 490
- DE-A- 3 031 141
- DE-A- 10 120 849
- DE-A- 19 836 304

## Beschreibung

Die vorliegende Erfindung betrifft ein Motorrad mit einer Rückhalteeinrichtung gemäß dem Oberbegriff des Patentanspruches 1.

Ein derartiges Motorrad ist aus der EP 1 348 616 A2 bekannt. Weitere Rückhaltevorrichtungen sind in der DE 25 31 490 A1, DE 101 20 849 A und der DE 30 31 141 A beschrieben.

Aus der DE 198 36 304 A1 ist eine Rückhalteeinrichtung für Motorradfahrer bekannt. Bei dem dort beschriebenen System ist der Motorradfahrer über einen Gurt, der am Motorradanzug befestigt ist, mit dem Motorrad verbunden. Diese Rückhalteeinrichtung soll den Motorradfahrer beim Bremsen bzw. Beschleunigen am Motorrad halten. Bei einem Sturz bzw. Unfall, bei dem eine vorgegebene Gurtzugkraft überschritten wird, öffnet sich der Schließmechanismus und der Fahrer fliegt über das Motorrad hinweg.

Aufgabe der Erfindung ist es, eine Rückhalteeinrichtung zu schaffen, die dem Motorradfahrer eine verbesserte passive Sicherheit bietet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Motorrad mit einer Rückhalteeinrichtung für den Motorradfahrer bzw. für den Sozius aus, bei der der Motorradfahrer bzw. der Sozius über ein Verbindungselement mit dem Motorrad verbunden ist. Während einer ersten Phase eines Auffahrunfalls wird der Motorradfahrer durch das Verbindungselement am Motorrad gehalten. Das Verbindungselement übt dabei eine "Rückhaltekraft" aus, die der Trägheitskraft des Motorradfahrers entgegenwirkt.

Der Kern der Erfindung besteht darin, dass das Verbindungselement während der ersten Phase kinetische Energie des Motorradfahrers abbaut. Wesentlich hierbei ist, dass der Motorradfahrer durch das Verbindungselement nicht vollkommen fest mit dem Motorrad verbunden ist. Vielmehr ist das Verbindungselement so konzipiert bzw. am Motorrad angeordnet, das es während der ersten Phase eine Relativverschiebung des Motorradfahrers relativ zum Motorrad ermöglicht. Durch die Relatiwerschiebung des Motorradfahrers entgegen der Rückhaltekraft des Verbindungselements wird Arbeit verrichtet, d.h. kinetische Energie des Motorradfahrers abgebaut. Anschließend wird aus Sicherheitsgründen das Verbindungselement ohne Zutun des Motorradfahrers gelöst.

Vorzugsweise handelt es sich bei dem Verbindungselement um einen Rückhaltegurt mit Aufrollautomatik, der an der Kleidung des Motorradfahrers festschnallbar ist. Ähnlich wie bei einem Sicherheitsgurt aus dem PkW-Bereich kann vorgesehen sein, dass der Rückhaltegurt im "normalen angeschnallten" Zustand durch Aufbringen einer relativ geringen "Ausziehkraft" ausziehbar ist und somit dem Motorradfahrer im angeschnallten Zustand eine weitgehend ungehinderte Bewegungsfreiheit auf dem Motorrad ermöglicht.

Bei Vorliegen eines Auffahrunfalls wird der Rückhaltegurt während der ersten Phase des Auffahrunfalls durch eine "Feststelleinrichtung" gegen weiteres "ungehindertes Ausziehen" gesichert. Während der ersten Phase des Auffahrunfalls kann der Rückhaltegurt zwar weiter "ausgezogen" werden. Die hierfür erforderliche Kraft ist jedoch wesentlich größer als die "normale" Ausziehkraft. Die Anordnung ist vorzugsweise so ausgelegt, das ein Ausziehen durch die Trägheitskraft des Motorradfahrers möglich ist.

Bei der Feststelleinrichtung kann es sich um eine rein mechanische Feststelleinrichtung handeln, ähnlich wie bei Sicherheitsgurtsystemen im Pkw-Bereich. Vorzugsweise handelt es sich jedoch um eine durch eine Elektronik ansteuerbare Feststelleinrichtung, was den Vorteil hat, dass "Ausziehkennlinien" elektronisch hinterlegt sein können.

Der Begriff "Ausziehen" ist sehr breit zu verstehen. Denkbar ist eine Anordnung mit einem Gurtaufwickler, der in der ersten Phase des Auffahrunfalls mit einer relativ großen Kraft, d.h. durch die Trägheitskraft des Motorradfahrers weiter abwickelbar ist. Alternativ dazu könnte aber auch ein Gurtabwickler vergesehen sein, der in der ersten Phase drehgesperrt ist und der entgegen einer Federkraft verschiebbar am Motorrad angeordnet ist.

Nach einer Weiterbildung der Erfindung ist eine Crashsensorik vorgesehen, die anhand eines oder mehrerer Fahrzustandsparameter erkennt, ob ein Auffahrunfall vorliegt.

Vorzugsweise wird das Verbindungselement durch die Elektronik gesteuert gelöst. Hierzu kann zwischen dem motorradseitigen Ende des Verbindungselementes und dem Motorrad ein "elektronisch ansteuerbarer" Auslösemechanismus vorgesehen sein. Beispielsweise kann vorgesehen sein, dass der elektronisch auslösbare Auslösmechanismus nach einer vorgegebenen Zeitdauer nach Erkennen eines Auffahrunfalls geöffnet wird. Alternativ oder ergänzend dazu kann vorgesehen sein, dass das Verbindungselement in Abhängigkeit von der Neigung des Motorrads gelöst wird. Beispielsweise kann vorgesehen sein, dass das Verbindungselement gelöst wird, wenn das Motorrad einen vorgegebenen Kippwinkel um eine Querachse überschreitet, das heißt wenn die Gefahr besteht, dass sich das Motorrad nach vorne überschlägt. Alternativ oder ergänzend dazu kann vorgesehen sein, dass das Verbindungselement gelöst wird, wenn das Motorrad droht, seitlich umzukippen, das heißt wenn der seitliche Kippwinkel des Motorrads einen vorgegebenen Wert überschreitet.

Entscheidend kann die passive Sicherheit durch einen Airbag verbessert werden, der im Lenkerbereich des Motorrads angeordnet ist und der bei einem Auffahrunfall auslöst. Der Motorradfahrer wird also durch das Verbindungselement zunächst am Motorrad gehalten und durch den Airbag vor einem Aufprall auf den Vorderbau des Motorrads geschützt.

Im folgenden wir die Erfindung im Zusammenhang mit der Zeichnung näher erläutert. Es zeigen:
- Figur 1: ein Motorrad in Seitenansicht mit einer Rückhalteeinrichtung gemäß der Erfindung;
- Figur 2: einen möglichen Kraftzeitverlauf am Verbindungselement.

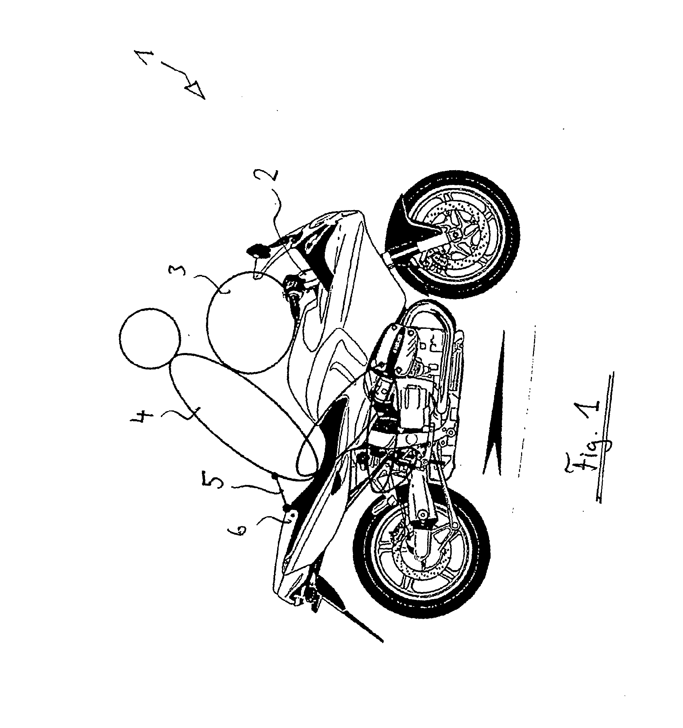

**Figur 1** zeigt ein Motorrad 1, bei dem im Bereich des Lenkers 2 ein hier nur schematisch dargestellter Airbag 3 vorgesehen ist. Der Airbag 3 wird ausgelöst, wenn durch eine Crashsensorik und eine Elektronik erkannt wird, dass das Motorrad 1 einen Unfall hat.

Ferner ist schematisch ein Fahrer 4 dargestellt. Der Motorradanzug des Fahrers 4 ist über ein hier nur schematisch dargestelltes Verbindungselement bzw. über einen Rückhaltegurt 5 an der Sitzbank 6 des Motorrads 1 festgeschnallt.

Zur Verbindung des Fahrers 4 mit dem Rückhaltegurt 5 kann beispielsweise am Motorradanzug des Fahrers eine Schnalle, Gurtschloss oder ähnliches vorgesehen sein. In normalen Fahrsituationen kann der Rückhaltegurt 5 ähnlich wie der Sicherheitsgurt bei einem Pkw mit einer sehr geringen Ausziehkraft ausgezogen werden. In normalen Fahrsituationen kann sich also der Fahrer im angeschnallten Zustand im wesentlichen ungehindert auf dem Motorrad bewegen.

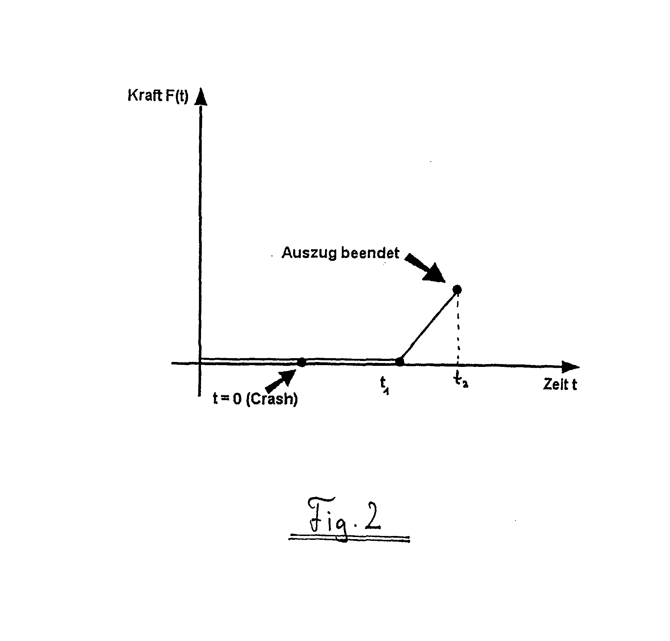

**Figur 2** zeigt ein mögliches Kraftzeitdiagramm der Auszugskraft des Verbindungselementes. Angenommen das Motorrad fahre im Zeitpunkt T=0 auf ein Hindernis auf. Dann dauert es eine gewisse Zeitspanne, bis die Crashsensorik bzw. Elektronik erkennt, dass eine Auffahrunfall vorliegt. Anschließend wird entweder rein mechanisch, ähnlich wie bei den meisten Pkw-Sicherheitsgurtsystemen, oder alternativ dazu elektronisch gesteuert der Rückhaltegurt im Zeitpunkt T₁ gesperrt.

"Sperren" bedeutet hier, dass der Rückhaltegurt nicht mehr mit der relativ geringen Ausziehkraft wie im Normalzustand ausgezogen werden kann. Jedoch kann der Rückhaltegurt durch die wesentlich größere Trägheitskraft des Motorradfahrers ausgezogen werden. In **Figur 2** ist eine entsprechende lineare Kennlinie dargestellt. Der Rückhaltegurt wird im "gesperrten" Zustand zwischen den Zeitpunkten T₁ und T₂ durch die Trägheitskraft des Fahrers weiter ausgezogen. Dabei wird der Fahrer abgebremst, das heißt es wird kinetische Energie abgebaut. Im Zeitpunkt T₂ löst der Rückhaltegurt aus. "Auslösen" bedeutet, dass die Verbindung zwischen dem Fahrer und dem Motorrad getrennt wird, zum Beispiel durch einen mechatronischen Auslösemechanismus, durch ein elektrisch ansteuerbares Gurtschloss oder ähnliches. Ab dem Zeitpunkt T₂ ist der Fahrer nicht mehr am Motorrad "festgehängt".

Es sei ausdrücklich darauf hingewiesen, dass die "Ausziehkennlinie" des Rückhaltegurtes nicht unbedingt, wie in **Figur 2** dargestellt, einen linearen Verlauf haben muss. Vielmehr sind beliebige andere Verläufe denkbar, zum Beispiel progressive oder degressive Kraft-Zeit-Verläufe. Wesentlich ist, dass kontrolliert Bewegungsenergie abgebaut wird.

## Patentansprüche

1. Motorrad (1) mit einer Rückhalteeinrichtung (5) für Motorradfahrer (4), mit
einem Verbindungselement (5), über das der Motorradfahrer (4) lösbar mit dem Motorrad (1) verbunden ist, wobei
das Verbindungselement (5) im Normalzustand durch Aufbringen einer Ausziehkraft ausziehbar ist und somit dem Motorradfahrer im angeschnallten Zustand eine weitgehend ungehinderte Bewegungsfreiheit auf dem Motorrad (1) ermöglicht, und wobei
bei Vorliegen eines Auffahrunfalls der Motorradfahrer (4) während einer ersten Phase des Auffahrunfalls zunächst durch das Verbindungselement (5) am Motorrad (1) gehalten wird, wobei die Rückhaltekraft des Verbindungselements (5) der Trägheitskraft des Motorradfahrers entgegenwirkt, und anschließend das Verbindungselement (5) ohne Zutun des Motorradfahrers (4) gelöst wird, wobei
das Verbindungselement während der ersten Phase des Auffahrunfalls durch eine Feststelleinrichtung gegen ungehindertes Ausziehen gesichert ist, **dadurch gekennzeichnet, dass** das Verbindungselement so konzipiert bzw. angeordnet ist, dass es während der ersten Phase infolge der Wirkung der Trägheitskraft des Motorradfahrers (4), die größer als die Kraft für ungehindertes Ausziehen ist, weiter ausziehbar ist, und eine Relativverschiebung des Motorradfahrers (4) relativ zum Motorrad entgegen der Richtung der Rückhaltekraft ermöglicht, wodurch kinetische Energie des Motorradfahrers (4) abgebaut wird.

2. Motorrad (1) nach Anspruch 1, wobei eine Crashsensorik und eine Elektronik vorgesehen sind, die anhand mindestens eines Fahrzustandsparameters erkennt, ob ein Auffahrunfall vorliegt.

3. Motorrad (1) nach Anspruch 1, wobei das Verbindungselement (5) durch die Elektronik gesteuert gelöst wird.

4. Motorrad (1) nach einem der Ansprüche 2 oder 3, wobei zwischen dem motorradseitigen Ende des Verbindungselement (5) und dem Motorrad (1) ein Auslösemechanismus vorgesehen ist, der durch die Elektronik auslösbar ist.

5. Motorrad (1) nach einem der Ansprüche 1 bis 4, wobei das Verbindungselement nach einer vorgegebenen Zeitdauer nach Erkennen eines Ausfahrunfalls gelöst wird.

6. Motorrad (1) nach einem der Ansprüche 1 bis 5, wobei das Verbindungselement (5) in Abhängigkeit von der Neigung des Motorrads (1) gelöst wird und zwar dann, wenn der Kippwinkel des Motorrads (1) um seine Querachse einen vorgegebenen Winkel überschreitet bzw. wenn Gefahr besteht, dass sich das Motorrad nach vorne überschlägt.

7. Motorrad (1) nach einem der Ansprüche 1 bis 6, wobei das Verbindungselement (5) in Abhängigkeit von der Seitenneigung des Motorrads (1) gelöst wird und zwar dann, wenn der Seitenneigungswinkel des Motorrads (1) einen vorgegebenen Winkel überschreitet.

8. Motorrad (1) nach einem der Ansprüche 2 bis 7, wobei das Motorrad im Lenkbereich einen Airbag (3) aufweist, der bei einem Auffahrunfall durch die Elektronik ausgelöst wird und der den Kopf bzw. Oberkörperbereich des Motorradfahrers (4) in der ersten Phase des Auffahrunfalls abfängt.

9. Motorrad (1) nach einem der Ansprüche 1 bis 8, wobei das Verbindungselement (5) an der Kleidung des Motorradfahrers (4) festschnallbar ist.

10. Motorrad (1) nach einem der Ansprüche 1 bis 9, wobei das Verbindungselement ein Rückhaltegurt ist, der durch eine Aufrollautomatik im angeschnallten Zustand gestrafft gehalten bzw. aufgerollt wird.

## Claims

1. A motorcycle (1) comprising a device (5) for retaining a motorcyclist (4), with
a connecting element (5) which releasably connects the motorcyclist (4) to the motorcycle (1), wherein
under normal conditions the connecting element (5) can be pulled out by exerting a force such that the motorcyclist when buckled up can move substantially freely on the motorcycle (1), and wherein
in the event of a rear end collision the motorcyclist (4), during a first phase of the collision, is initially held on the motorcycle (1) by the connecting element (5), wherein the retaining force of the connecting element (5) counteracts the inertial force of the motorcyclist, after which the connecting element (5) is released without action by the motorcyclist (4), wherein
during the first phase of the collision the connecting element is secured by a locking device against free pulling out,
**characterised in that** the connecting element is so designed or disposed that during the first phase, owing to the inertial force of the motorcyclist (4), which is greater than the force for unhindered pulling out, the connecting element can be additionally pulled out and enables the motorcyclist (4) to move relative to the motorcycle against the direction of the retaining force, thus dissipating the kinetic energy of the motorcyclist (4).

2. A motorcycle (1) according to claim 1, wherein a crash sensor is provided together with an electronic unit which, by means of at least one vehicle-state parameter, recognises whether a rear end accident has occurred.

3. A motorcycle (1) according to claim 1, wherein the connecting element (5) is released in controlled manner by the electronic unit.

4. A motorcycle (1) according to claim 2 or claim 3, wherein a triggering mechanism triggered by the electronic unit is provided between the motorcycle (1) and the motorcycle end of the connecting element (5).

5. A motorcycle (1) according to any of claims 1 to 4, wherein the connecting element is released a set time after a rear end crash has been recognised.

6. A motorcycle (1) according to any of claims 1 to 5, wherein the connecting element (5) is released in dependence on the inclination of the motorcycle (1), i.e. if the tilt of the motorcycle (1) around its transverse axis exceeds a set angle or if there is a risk that the motorcycle will nose-over.

7. A motorcycle (1) according to any of claims 1 to 6, wherein the connecting element (5) is released in dependence on the lateral inclination of the motorcycle (1), if the lateral inclination of the motorcycle (1) exceeds a set angle.

8. A motorcycle (1) according to any of claims 2 to 7, wherein in the steering region the motorcycle comprises an airbag (3) which in the event of a rear end collision is triggered by the electronic unit and receives the motorcyclist's (4) head or upper body region during the first phase of the collision.

9. A motorcycle (1) according to any of claims 1 to 8, wherein the connecting element (5) can be buckled to the motorcyclist's (4) clothing.

10. A motorcycle (1) according to any of claims 1 to 9, wherein the connecting element is a safety belt which is held tightened or rolled up by a belt retractor when buckled up.

## Revendications

1. Motocycle (1) comportant une installation de retenue (5) du motocycliste (4), comprenant :
un élément de liaison (5) reliant de façon détachable le motocycliste (4) à la moto (1),
à l'état normal, l'élément de liaison (5) peut s'extraire en exerçant une force d'extraction permettant ainsi au motocycliste à l'état attaché, de disposer d'une liberté de mouvement pratiquement illimitée sur la moto (1), et
en cas de collision, le motocycliste (4) est retenu à la moto (1) au cours de la première phase de la collision tout d'abord par l'élément de liaison (5), la force de retenue de l'élément de liaison (5) s'opposant à la force d'inertie du motocycliste puis l'élément de liaison (5) se libère sans l'intervention du motocycliste (4),
l'élément de liaison est bloqué contre l'extraction au cours de la première phase de la collision par une installation de blocage,
**caractérisé en ce que**
l'élément de liaison est conçu et monté pour qu'au cours de la première phase, sous l'effet de la force d'inertie du motocycliste (4) supérieure à la force nécessaire à l'extraction libre, il puisse continuer d'être extrait en permettant un coulissement relatif du motocycliste (4) par rapport à la moto dans la direction opposée à la direction de la force de retenue pour absorber l'énergie cinétique du motocycliste (4).

2. Motocycle (1) selon la revendication 1,
ayant des capteurs de collision et une électronique permettant de détecter un paramètre d'état de conduite pour déterminer l'existence d'une collision.

3. Motocycle (1) selon la revendication 1,
dans lequel
l'élément de liaison (5) est libéré de façon commandée par le circuit électronique.

4. Motocycle (1) selon l'une des revendications 2 ou 3,
selon lequel
entre l'extrémité de l'élément de liaison (5) côté moto et la moto (1) un mécanisme de libération est déclenché par le circuit électronique.

5. Motocycle (1) selon l'une des revendications 1 à 4,
selon lequel
l'élément de liaison est libéré après une durée prédéfinie suivant la détection d'une collision.

6. Motocycle (1) selon l'une des revendications 1 à 5,
selon lequel
l'élément de liaison (5) est libéré en fonction de l'inclinaison de la moto (1) et cela si son angle de basculement autour de son axe transversal dépasse un angle prédéfini ou s'il existe un risque que la moto se retourne vers l'avant.

7. Motocycle (1) selon l'une des revendications 1 à 6,
selon lequel
l'élément de liaison (5) est libéré en fonction de l'inclinaison latérale de la moto (1) dans la mesure où l'angle d'inclinaison latérale de la moto (1) dépasse un angle prédéfini.

8. Motocycle (1) selon l'une des revendications 2 à 7,
selon lequel
dans la zone du guidon la moto comporte un coussin gonflable (3) qui est déclenché par le circuit électronique en cas de collision et qui reçoit la tête ou le buste du motocycliste (4) au cours de la première phase de la collision.

9. Motocycle (1) selon l'une des revendications 1 à 8,
selon lequel
l'élément de liaison (5) s'attache au vêtement du motocycliste (4).

10. Motocycle (1) selon l'une des revendications 1 à 9,
selon lequel
l'élément de liaison est une ceinture de retenue tendue ou maintenue enroulée par un automatisme d'enrouleur, à l'état attaché.
